# FASCICULE DE BREVET EUROPEEN

(11) **EP 4 132 839 B1**
(45) Date de publication et mention de la délivrance du brevet: **03.09.2025**
(21) Numéro de dépôt: 21717493.7
(22) Date de dépôt: 09.03.2021
(51) Int. Cl.: B62D 21/15, B62D 25/08, B60R 19/24

(54) **VÉHICULE À ÉLÉMENT(S) STRUCTUREL(S) POURVU(S) D'UN ÉLÉMENT ANTI-FLÉCHISSEMENT**
FAHRZEUG MIT STRUKTURELEMENT(EN) MIT EINEM KNICKSCHUTZELEMENT
VEHICLE WITH STRUCTURAL ELEMENT(S) PROVIDED WITH AN ANTI-BENDING ELEMENT

(30) Priorité: 08.04.2020 FR 2003504
(43) Date de publication de la demande: 15.02.2023
(73) Titulaire: Stellantis Auto SAS, 78300 Poissy (FR)
(72) Inventeur: PERON, Rodolphe, 95220 HERBLAY (FR); ROYER, Guillaume, 91680 BRUYERES LE CHATEL (FR)
(74) Mandataire: BCIP
(86) Numéro de dépôt international: PCT/FR2021/050397
(87) Numéro de publication internationale: WO 2021/205087

(56) Documents cités:
- DE-A1- 10 060 393
- FR-A1- 2 944 252
- US-A- 6 059 331
- US-A1- 2014 015 281

## Description

La présente invention revendique la priorité de la demande française 2003504 déposée le 08 avril 2020.

### Domaine technique de l'invention

L'invention concerne les véhicules qui comprennent au moins un élément structurel s'étendant de l'avant vers l'arrière et ayant une extrémité avant à laquelle est couplé un dispositif d'absorption de choc.

### Etat de la technique

Certains véhicules, souvent de type automobile, comprennent au moins un élément structurel s'étendant de l'avant vers l'arrière et ayant une extrémité avant comprenant une platine avant, et au moins un dispositif d'absorption de choc ayant une platine arrière solidarisée à la platine avant en amont de cette dernière. C'est notamment le cas des éléments structurels appelés brancards et auxquels est solidarisée, notamment, une partie d'un groupe motopropulseur (ou GMP).

Comme le sait l'homme de l'art, dans certains véhicules l'extrémité avant de l'élément structurel est située à un premier niveau (vertical), et le dispositif d'absorption de choc est placé à un second niveau qui est décalé verticalement, au moins partiellement, par rapport à ce premier niveau. En raison de ce décalage vertical, en cas de choc par l'avant subi par le dispositif d'absorption de choc il peut arriver qu'une partie des platines arrière et avant, située dans la zone où est situé le décalage vertical, fléchisse vers l'arrière et donc vers l'élément structurel concerné, y compris à faible vitesse. Par conséquent, le dispositif d'absorption de choc ne peut pas assurer correctement sa fonction et peut endommager l'élément structurel, éventuellement de façon non réparable (hormis par remplacement à l'identique). En outre, l'endommagement de l'élément structurel peut induire des déplacements d'équipements qui sont solidarisés fixement à lui, ce qui peut induire des dommages collatéraux dans leur environnement.

L'invention a donc notamment pour but d'améliorer la situation.

### Présentation de l'invention

Elle propose notamment à cet effet un véhicule comprenant :
- au moins un élément structurel s'étendant de l'avant vers l'arrière du véhicule et ayant une extrémité avant située à un premier niveau et comprenant une platine avant, et
- au moins un dispositif d'absorption de choc ayant une platine arrière solidarisée à la platine avant en amont de cette dernière et placé à un second niveau décalé verticalement au moins partiellement par rapport au premier niveau.

Ce véhicule se caractérise par le fait que l'extrémité avant de son (chaque) élément structurel peut comprendre un élément anti-fléchissement s'étendant entre elle et la platine avant et limitant un fléchissement vers l'arrière d'une partie des platines arrière et avant, située dans une zone où est situé le décalage vertical, en cas de choc par l'avant subi par le dispositif d'absorption de choc. Ledit élément anti-fléchissement comprend sur une extrémité arrière une découpe ayant une largeur égale, à un jeu près, à une largeur locale dudit élément structurel, et logeant une partie de ce dernier de manière à contraindre ledit élément anti-fléchissement à se translater vers l'arrière suivant une direction d'extension dudit élément structurel en cas de choc.

Grâce à ce placement dans la zone de décalage vertical de l'élément anti-fléchissement on peut limiter, voire empêcher, le fléchissement vers l'arrière du véhicule d'une partie du dispositif d'absorption de choc, permettant ainsi à ce dernier d'assurer correctement sa fonction sensiblement dans l'axe de l'extrémité avant de l'élément structurel.

Le véhicule selon l'invention peut comporter d'autres caractéristiques qui peuvent être prises séparément ou en combinaison, et notamment :
- en cas de décalage vertical vers le haut, le (chaque) élément anti-fléchissement peut être incliné vers l'arrière du haut vers le bas ;
- le (chaque) élément anti-fléchissement peut faire partie intégrante de la platine avant correspondante ;
- en variante le (chaque) élément anti-fléchissement peut faire partie intégrante d'une pièce rapportée installée derrière la platine avant correspondante ;
- il peut comprendre un élément de guidage s'étendant entre la platine avant et l'extrémité avant de l'élément structurel correspondant dans une autre zone opposée à la zone où est situé le décalage vertical par rapport à l'élément structurel correspondant, et comprenant un passage ayant une largeur égale, à un jeu près, à une autre largeur locale de cet élément structurel, et logeant une autre partie de ce dernier de manière à contraindre cet élément de guidage à se translater vers l'arrière suivant une direction d'extension de cet élément structurel en cas de choc ;
- le (chaque) élément de guidage peut faire partie intégrante de la platine avant ;
- en variante, le (chaque) élément de guidage peut faire partie intégrante de la pièce rapportée, cette dernière comprenant une partie centrale reliant entre eux les élément anti-fléchissement et élément de guidage et dans laquelle est défini un trou traversant traversé par l'extrémité avant de l'élément structurel correspondant ;
- la (chaque) pièce rapportée peut être solidarisée fixement à la platine avant ;
- il peut être de type automobile.

### Brève description des figures

D'autres caractéristiques et avantages de l'invention apparaîtront à l'examen de la description détaillée ci-après, et des dessins annexés, sur lesquels :

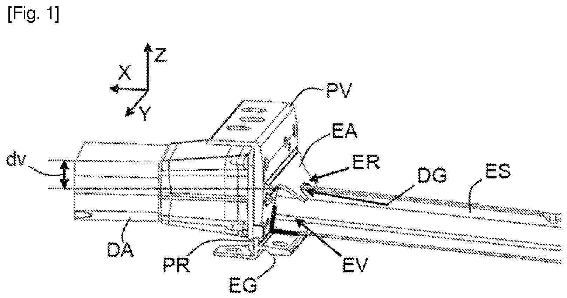

[Fig. 1] illustre schématiquement, dans une vue en perspective, une partie d'un premier exemple d'élément structurel d'un véhicule selon l'invention, auquel est couplé un dispositif d'absorption de choc et comprenant une platine avant pourvue d'un élément anti-fléchissement et d'un élément de guidage, et

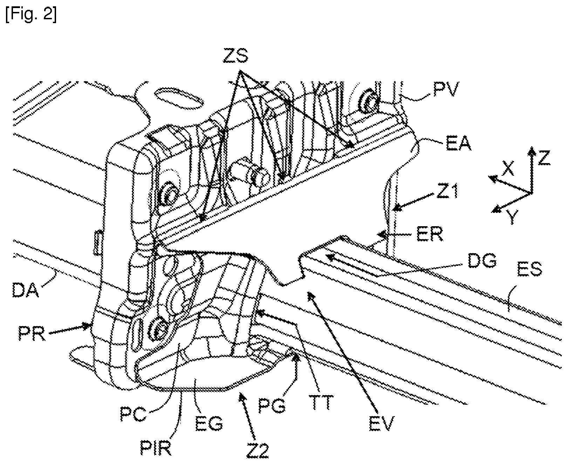

[Fig. 2] illustre schématiquement, dans une vue en perspective, une partie d'un second exemple d'un élément structurel d'un véhicule selon l'invention, auquel est couplé un dispositif d'absorption de choc et comprenant une platine avant à laquelle est solidarisée une pièce rapportée comprenant un élément anti-fléchissement et un élément de guidage.

### Description détaillée de l'invention

L'invention a notamment pour but de proposer un véhicule comprenant au moins un élément structurel ES s'étendant de l'avant vers l'arrière et ayant une extrémité avant EV à laquelle est couplé un dispositif d'absorption de choc DA dont le fléchissement vers l'arrière est limité.

Dans ce qui suit, on considère, à titre d'exemple non limitatif, que le véhicule est de type automobile. Il s'agit par exemple d'une voiture. Mais l'invention n'est pas limitée à ce type de véhicule. En effet, l'invention concerne n'importe quel véhicule comprenant un compartiment avant logeant au moins un élément structurel s'étendant de l'avant vers l'arrière. Ainsi, l'invention concerne au moins les véhicules terrestres (hormis les motocyclettes) et les bateaux.

Par ailleurs, on considère dans ce qui suit, à titre d'exemple non limitatif, que le véhicule comprend deux éléments structurels ES appelés brancards et auxquels est solidarisée une partie d'un groupe motopropulseur (ou GMP). Mais l'invention concerne tout véhicule comprenant au moins un élément structurel s'étendant de l'avant vers l'arrière.

Dans ce qui précède et ce qui suit les notions d'avant et d'arrière sont relatives aux extrémités avant et arrière du véhicule, une portion avant d'un élément étant située plus près de l'extrémité avant du véhicule qu'une portion arrière de ce même élément, et portion arrière d'un élément arrière étant située plus près de l'extrémité arrière du véhicule qu'une portion avant de ce même élément.

Sur les figures 1 et 2 la direction X est la direction longitudinale du véhicule, laquelle est parallèle aux côtés latéraux comportant les portières latérales, la direction Y est la direction transversale du véhicule, laquelle est perpendiculaire à la direction X, et la direction Z est la direction verticale du véhicule, laquelle est perpendiculaire aux directions longitudinale X et transversale Y.

On a schématiquement illustré sur les figures 1 et 2 des parties de premier et second exemples d'éléments structurels ES d'un véhicule selon l'invention, à chacun desquels est couplé un dispositif d'absorption de choc DA. On comprendra qu'en présence de deux éléments structurels ES le véhicule comprend deux dispositifs d'absorption de choc DA couplés respectivement à ces derniers (ES). Chaque élément structurel ES peut, par exemple, être réalisé en acier.

Comme illustré, l'élément structurel ES s'étend de l'avant vers l'arrière du véhicule et a une extrémité avant EV (orientée vers l'avant du véhicule) qui est située à un premier niveau suivant la direction verticale Z et qui comprend une platine avant PV. Par exemple, la platine avant PV peut être solidarisée fixement à l'extrémité avant EV par soudage ou vissage. Mais cette solidarisation pourrait aussi se faire par collage, l'important étant qu'elle résiste à toutes les contraintes de façon pérenne.

Chaque platine avant PV peut, par exemple, être réalisée en acier ou en aluminium.

Le dispositif d'absorption de choc DA a une platine arrière PR qui est solidarisée à la platine avant PV de l'élément structurel ES correspondant, en amont de (et donc avant) cette platine avant PV. Cette solidarisation peut se faire par vissage, comme illustré non limitativement sur les figures 1 et 2, mais elle pourrait aussi se faire par soudage ou collage.

Ce dispositif d'absorption de choc DA est placé à un second niveau vertical qui est décalé verticalement, au moins partiellement, par rapport au premier niveau. Sur la figure 1 ce décalage vertical est matérialisé par la référence dv.

On notera que dans les exemples illustrés non limitativement sur les figures 1 et 2 le décalage vertical dv du dispositif d'absorption de choc DA par rapport à l'élément structurel ES est vers le haut. Mais dans une variante de réalisation il pourrait être vers le bas.

L'extrémité avant EV de l'élément structurel ES comprend un élément anti-fléchissement EA qui s'étend entre elle (EV) et la platine avant PV. Cet élément anti-fléchissement EA est agencé de manière à limiter (et si possible empêcher totalement) le fléchissement vers l'arrière du véhicule d'une partie des platines arrière PR et avant PV, située dans une première zone Z1 où est situé le décalage vertical dv, en cas de choc par l'avant subi par le dispositif d'absorption de choc DA. Un tel choc survient lorsque le véhicule fait l'objet d'un choc sensiblement frontal, par l'avant.

On comprendra que le placement dans la zone Z1 de cet élément anti-fléchissement EA permet avantageusement de limiter, voire empêcher, le fléchissement vers l'arrière du véhicule d'une partie du dispositif d'absorption de choc DA. Cela permet à ce dernier (DA) d'assurer correctement sa fonction sensiblement dans l'axe de l'extrémité avant EV de l'élément structurel ES et donc d'éviter que ce dernier (ES) et les équipements qui sont solidarisés à lui induisent des dommages collatéraux dans leur environnement.

On notera, comme illustré non limitativement sur les figures 1 et 2, qu'en cas de décalage vertical dv vers le haut, l'élément anti-fléchissement EA est incliné vers l'arrière du haut vers le bas. Cette inclinaison permet d'optimiser l'effet anti-fléchissement. Dans une variante de réalisation non illustrée, en cas de décalage vertical dv vers le bas, l'élément anti-fléchissement EA est incliné vers l'arrière du bas vers le haut.

On notera également, comme illustré non limitativement sur les figures 1 et 2, que l'élément anti-fléchissement EA comprend sur une extrémité arrière ER, voisine de l'élément structurel ES, une découpe DG ayant une largeur qui est égale, à un jeu près, à la largeur locale de l'élément structurel ES. Cette découpe DG loge une partie (ici supérieure) de cet élément structurel ES afin de contraindre l'élément anti-fléchissement EA à se translater vers l'arrière du véhicule suivant une direction d'extension de l'élément structurel ES en cas de choc. En d'autres termes, la découpe DG permet avantageusement de guider l'élément anti-fléchissement EA en translation vers l'arrière le long de l'élément structurel ES en cas de choc, permettant ainsi d'éviter une possible torsion de l'élément anti-fléchissement EA par échappement transversal (suivant Y) qui pourrait induire un endommagement complexe de l'élément structurel ES par le dispositif d'absorption de choc DA.

Par exemple, et comme illustré non limitativement sur la figure 1, l'élément anti-fléchissement EA peut faire partie intégrante de la platine avant PV. Dans ce cas, l'élément anti-fléchissement EA peut, par exemple, être réalisé par usinage et/ou emboutissage.

En variante, et comme illustré non limitativement sur la figure 2, l'élément anti-fléchissement EA peut faire partie intégrante d'une pièce rapportée PIR qui est installée derrière (ou en aval de) la platine avant PV.

On notera également, comme illustré non limitativement sur les figures 1 et 2, que le véhicule peut aussi comprendre (pour chaque élément structurel ES) un élément de guidage EG qui s'étend entre la platine avant PV et l'extrémité avant EV de cet élément structurel ES dans une autre zone Z1 opposée à la zone Z1 où est situé le décalage vertical dv par rapport à l'élément structurel ES. Cet élément de guidage EG comprend un passage PG qui a une largeur égale, à un jeu près, à une autre largeur locale de l'élément structurel ES (ici dans sa partie inférieure), et qui loge une autre partie (ici inférieure) de ce dernier (ES) afin de contraindre cet élément de guidage EG à se translater vers l'arrière suivant la direction d'extension de l'élément structurel ES en cas de choc. En d'autres termes, le passage PG permet aussi avantageusement de guider l'élément anti-fléchissement EA en translation vers l'arrière le long de l'élément structurel ES en cas de choc, en complément de la découpe DG. La platine avant PV (et donc aussi la platine arrière PR) se retrouve(nt) maintenue(s) transversalement (suivant Y) par rapport aux parties supérieure et inférieure de l'extrémité avant EV de l'élément structurel ES, ce qui permet encore plus d'éviter une possible torsion de l'élément anti-fléchissement EA par échappement transversal (suivant Y) qui pourrait induire un endommagement complexe de l'élément structurel ES par le dispositif d'absorption de choc DA.

Par exemple, et comme illustré non limitativement sur la figure 2, le passage PG peut être délimité transversalement (suivant Y) par deux protubérances (ou murets).

Egalement par exemple, et comme illustré non limitativement sur la figure 1, l'élément de guidage EG peut faire partie intégrante de la platine avant PV. Dans ce cas, l'élément de guidage EG peut, par exemple, être réalisé par usinage et/ou emboutissage.

En variante, et comme illustré non limitativement sur la figure 2, l'élément de guidage EG peut faire partie intégrante de la même pièce rapportée PIR que celle qui peut comprendre l'élément anti-fléchissement EA et qui est alors installée derrière (ou en aval de) la platine avant PV. Dans ce cas, la pièce rapportée PIR comprend aussi une partie centrale PC qui relie entre eux l'élément anti-fléchissement EA et l'élément de guidage EG et dans laquelle est défini un trou traversant TT qui est traversé par l'extrémité avant EV de l'élément structurel ES.

On notera également que l'éventuelle pièce rapportée PIR est préférentiellement solidarisée fixement à la platine avant PV. Comme illustré non limitativement sur la figure 2 cette solidarisation fixe se fait préférentiellement par soudage, par exemple en au moins trois zones ZS (ici de la partie supérieure de la pièce rapportée PIR, mais en variante ou en complément au moins une zone de soudage ZS pourrait se trouver dans la partie inférieure de la pièce rapportée PIR). La solidarisation fixe pourrait aussi se faire par vissage.

Chaque pièce rapportée PIR peut, par exemple, être réalisée en acier ou en aluminium.

## Revendications

1. Véhicule comprenant i) au moins un élément structurel (ES) s'étendant de l'avant vers l'arrière dudit véhicule et ayant une extrémité avant (EV) située à un premier niveau et comprenant une platine avant (PV), et ii) au moins un dispositif d'absorption de choc (DA) ayant une platine arrière (PR) solidarisée à ladite platine avant (PV) en amont de cette dernière (PV) et placé à un second niveau décalé verticalement au moins partiellement par rapport audit premier niveau, ladite extrémité avant (EV) comprenant un élément anti-fléchissement (EA) s'étendant entre elle (EV) et ladite platine avant (PV) et limitant un fléchissement vers l'arrière d'une partie desdites platines arrière (PR) et avant (PV), située dans une zone où est situé le décalage vertical, en cas de choc par l'avant subi par ledit dispositif d'absorption de choc (DA), **caractérisé en ce que** ledit élément anti-fléchissement (EA) comprend sur une extrémité arrière (ER) une découpe (DG) ayant une largeur égale, à un jeu près, à une largeur locale dudit élément structurel (ES), et logeant une partie de ce dernier (ES) de manière à contraindre ledit élément anti-fléchissement (EA) à se translater vers l'arrière suivant une direction d'extension dudit élément structurel (ES) en cas de choc.

2. Véhicule selon la revendication 1, **caractérisé en ce qu'**en cas de décalage vertical vers le haut, ledit élément anti-fléchissement (EA) est incliné vers l'arrière du haut vers le bas.

3. Véhicule selon l'une des revendications 1 à 2, **caractérisé en ce que** ledit élément anti-fléchissement (EA) fait partie intégrante de ladite platine avant (PV).

4. Véhicule selon l'une des revendications 1 à 2, **caractérisé en ce que** ledit élément anti-fléchissement (EA) fait partie intégrante d'une pièce rapportée (PIR) installée derrière ladite platine avant (PV).

5. Véhicule selon l'une des revendications 1 à 4, **caractérisé en ce qu'**il comprend un élément de guidage (EG) s'étendant entre ladite platine avant (PV) et ladite extrémité avant (EV) dans une autre zone opposée à ladite zone où est situé le décalage vertical par rapport audit élément structurel (ES), et comprenant un passage (PG) ayant une largeur égale, à un jeu près, à une autre largeur locale dudit élément structurel (ES), et logeant une autre partie de ce dernier (ES) de manière à contraindre cet élément de guidage (EG) à se translater vers l'arrière suivant une direction d'extension dudit élément structurel (ES) en cas de choc.

6. Véhicule selon la revendication 5, **caractérisé en ce que** ledit élément de guidage (EG) fait partie intégrante de ladite platine avant (PV).

7. Véhicule selon la combinaison des revendications 4 et 5, **caractérisé en ce que** ledit élément de guidage (EG) fait partie intégrante de ladite pièce rapportée (PIR), cette dernière (PIR) comprenant une partie centrale (PC) reliant entre eux lesdits élément anti-fléchissement (EA) et élément de guidage (EG) et dans laquelle est défini un trou traversant (TT) traversé par ladite extrémité avant (EV).

8. Véhicule selon la revendication 4 ou 7, **caractérisé en ce que** ladite pièce rapportée (PIR) est solidarisée fixement à ladite platine avant (PV).

9. Véhicule selon l'une des revendications 1 à 8, **caractérisé en ce qu'**il est de type automobile.

## Patentansprüche

1. Fahrzeug, umfassend i) mindestens ein Strukturelement (ES), das sich von vorne nach hinten des Fahrzeugs erstreckt und ein vorderes Ende (EV) aufweist, das sich auf einer ersten Ebene befindet und eine vordere Platte (PV) aufweist, und ii) mindestens eine Stoßdämpfervorrichtung (DA), die eine hintere Platte (PR) aufweist, die mit der vorderen Platte (PV) stromaufwärts der vorderen Platte (PV) verbunden ist und auf einer zweiten Ebene angeordnet ist, die in Bezug auf die erste Ebene zumindest teilweise vertikal versetzt ist, wobei das vordere Ende (EV) ein Antibiegeelement (EA) aufweist, das sich zwischen der vorderen Platte erstreckt (PV) und die Rückwärtsbiegung eines Teils der hinteren (PR) und der vorderen (PV) Platten begrenzt, der sich in einem Bereich befindet, in dem die vertikale Verschiebung liegt, im Falle eines von der Stoßdämpfervorrichtung (DA) erlittenen Stoßes von vorne, **dadurch gekennzeichnet, dass** das Antibiegeelement (EA) an einem hinteren Ende (ER) einen Ausschnitt (DG) aufweist, der eine Breite hat, die mit einem Abstand gleich einer lokalen Breite des Strukturelements (ES) ist, und einen Teil des letzteren (ES) aufnimmt, um das Antibiegeelement (EA) zu zwingen, sich nach vorne zu verschieben die Rückseite in einer Ausdehnungsrichtung des Strukturelements (ES) bei einem Aufprall.

2. Fahrzeug nach Anspruch 1, **dadurch gekennzeichnet, dass** bei vertikaler Verschiebung nach oben das Antibiegeelement (EA) nach hinten von oben nach unten geneigt ist.

3. Fahrzeug nach einem der Ansprüche 1 bis 2, **dadurch gekennzeichnet, dass** das Antibiegeelement (EA) integraler Bestandteil der vorderen Platte (PV) ist.

4. Fahrzeug nach einem der Ansprüche 1 bis 2, **dadurch gekennzeichnet, dass** das Antibiegeelement (EA) integraler Bestandteil eines hinter der vorderen Platte (PV) angebrachten Einsatzes (PIR) ist.

5. Fahrzeug nach einem der Ansprüche 1 bis 4, **dadurch gekennzeichnet, dass** es ein Führungselement (EG) umfasst, das sich zwischen der vorderen Platte (PV) und dem vorderen Ende (EV) in einem anderen Bereich gegenüber dem Bereich erstreckt, in dem sich der vertikale Versatz in Bezug auf das Strukturelement (ES) befindet, und einen Durchgang (PG) umfasst, der eine Breite aufweist, die einem Spiel nahe einer anderen lokalen Breite des Strukturelements (ES) entspricht, und einen anderen Teil des letzteren (ES) aufnimmt, um das Führungselement (EG) zu zwingen, sich in einer Ausdehnungsrichtung des Strukturelements nach hinten zu verschieben (ES) im Falle eines Schocks.

6. Fahrzeug nach Anspruch 5, **dadurch gekennzeichnet, dass** das Führungselement (EG) integraler Bestandteil der vorderen Platte (PV) ist.

7. Fahrzeug nach der Kombination der Ansprüche 4 und 5, **dadurch gekennzeichnet, dass** das Führungselement (EG) ein integraler Bestandteil des Einsatzes (PIR) ist, wobei der letztere (PIR) einen zentralen Abschnitt (PC) aufweist, der das Antibiegeelement (EA) und das Führungselement (EG) miteinander verbindet und in dem ein Durchgangsloch (TT) definiert ist, das von dem vorderen Ende (EV) durchquert wird.

8. Fahrzeug nach Anspruch 4 oder 7, **dadurch gekennzeichnet, dass** der Einsatz (PIR) fest mit der vorderen Platte (PV) verbunden ist.

9. Fahrzeug nach einem der Ansprüche 1 bis 8, **dadurch gekennzeichnet, dass** es ein Kraftfahrzeug ist.

## Claims

1. Vehicle comprising i) at least one structural item (ES) extending from the front towards the rear of said vehicle and having a front end (EV) located on a first level and comprising a front plate (PV), and ii) at least one shock absorber device (DA) having a rear plate (PR) secured to said front plate (PV) upstream to the latter (PV) and placed on a second level vertically offset at least partially by report to said first level, said front end (EV) comprising an anti-bending item (EA) extending between it (EV) and said front plate (PV) and limiting a bending towards the rear of a part of said rear plate (PR) and front plate (PV), located in a zone where the vertical offset is located, in the event of a shock from the front undergone by said shock absorbing device (DA), **characterised in that** said anti-bending item (EA) comprises on a rear end (ER) a cutout (DG) having a width equal, to within one clearance, to a local width of said structural item (ES), and housing a part of the latter (ES) so as to constrain said anti-bending item (EA) to be translated to the rear following an extension management of that structural item (ES) in the event of an impact.

2. Vehicle according to claim 1, wherein in the case of an upward vertical offset, said anti-bending item (EA) is inclined towards the rear from the top downward.

3. Vehicle according to one of Claims 1 to 2, **characterised in that** the said anti-bending item (EA) forms an integral part of the said front plate (PV).

4. Vehicle according to one of Claims 1 to 2, **characterised in that** the said anti-bending item (EA) forms an integral part of an added component (PIR) installed behind the said front plate (PV).

5. Vehicle according to one of Claims 1 to 4, **characterised in that** it comprises a guide item (EG) extending between the said front plate (PV) and the said front end (EV) in another zone opposite the said zone where the vertical offset is located by report with the said structural item (ES), and comprising a passage (PG) having a width equal, to within one clearance, to another local width of the said structural item (ES), and housing another part of the latter (ES) so as to constrain the said guide item (EG) to move towards the rear following an extension management of that structural item (ES) in the event of an impact.

6. Vehicle according to claim 5, wherein said guide item (EG) forms an integral part of said front plate (PV).

7. A vehicle according to the combination of claims 4 and 5, wherein said guide item (EG) forms an integral part of said attached component (PIR), said attached vehicle (PIR) comprising a central part (PC) connecting said anti-bending item (EA) and guide item (EG) together and wherein a through hole (TT) is defined through which said front end (EV) passes.

8. Vehicle according to Claim 4 or 7, **characterised in that** the said added component (PIR) is fixedly attached to the said front plate (PV).

9. Vehicle according to one of Claims 1 to 8, **characterised in that** it is of the motor vehicle type.
